# EUROPÄISCHE PATENTSCHRIFT

(11) **EP 1 600 983 B1**
(45) Veröffentlichungstag und Bekanntmachung des Hinweises auf die Patenterteilung: **30.11.2011**
(21) Anmeldenummer: 05010557.6
(22) Anmeldetag: 14.05.2005
(51) Int. Cl.: G21C 15/12, G21C 13/073

(54) **Reaktordruckbehälterdeckel für einen Siedewasserreaktor**
Reactor pressure vessel closure head for a boiling water reactor
Couvercle d'une cuve sous pression pour réacteur à eau bouillante

(30) Priorität: 25.05.2004 DE 102004025585
(43) Veröffentlichungstag der Anmeldung: 30.11.2005
(73) Patentinhaber: Westinghouse Electric Germany GmbH, 68167 Mannheim (DE)
(72) Erfinder: Hübner, Berhard, Dipl.-Ing. (FH), 68163 Mannheim (DE); Benitz, Klaus, Dipl.-Ing., 69518 Absteinach (DE)
(74) Vertreter: Miller, Toivo

(56) Entgegenhaltungen:
- JP-A- 2 186 294
- JP-A- 11 231 088
- JP-A- 2000 292 583

## Beschreibung

Die Erfindung betrifft einen Reaktordruckbehälterdeckel für einen Siedewasserreaktor nach dem Oberbegriff des Anspruches 1.

Es ist allgemein bekannt, dass bei Siedewasserreaktoren Deckelkühlsysteme für den Reaktordruckbehälterdeckel eingesetzt werden, um bei bestimmten transienten Zuständen des Reaktors, insbesondere beim Abfahren, die thermische Belastung des Reaktordruckbehälterdeckels möglichst klein zu halten.

Eine Ausgestaltung eines solchen Deckelkühlsystems weist auf der dem Reaktorinneren zugewandten Seite des Reaktordruckbehälterdeckels eine Anzahl von Stutzen auf, an denen Deckelsprühköpfe angebracht sind. Diese Stutzen haben Gewinde, auf die die sogenannten Deckelsprühköpfe aufgeschraubt sind. Das dem Deckelsprühkopf durch den Stutzen zugeführte Kühlwasser soll jedoch nicht über diese Schraubverbindung in das Reaktorinnere gelangen. Zudem muss der aufgeschraubte Deckelsprühkopf in einer bestimmten vorgesehenen Position fixierbar sein. Dies wird bei den bekannt gewordenen Deckelsprühköpfen dadurch erreicht, dass die Schraubverbindung zwischen Stutzen und Deckelsprühkopf mit einer Schweißverbindung dichtgeschweißt wird.

Das Dokument JP 02 186294 offenbart ein Sprühkopf mit mehreren Düsen, welcher am Deckel eines Reaktordruckbehälters angeordnet ist. Der Sprühkopf weist einen gegenüber der eigentlichen Kühlwasserzuleitung verdickten, längserstreckten Leitungs- oder Sprühkopfkörper auf, welcher mit einer Zuleitung, die eine düsenartige Durchführung des Reaktordruckbehalterdeckels durchgreift, verbunden ist. Das Dokument JP 11 231088 betrifft eine Kühlvorrichtung für einen Reaktordruckbehälterdeckel zur Verringerung der Temperatur eines Deckels eines Reaktordruckbehälters. Demgemäß ist eine Kühlwasserleitung mit einem Stutzern oder Flansch verbunden, der am Deckel des Reaktordruckbehälters angeordnet ist. Am Ende des Stutzens eines ins Innere des Reaktordruckbehälters reichendes Leitungsstückes eine Sprühdüse beziehungsweise ein Sprühkopf mit zahlreichen Sprühdüsen angeordnet.

Es hat sich herausgestellt, dass nach einer bestimmten Betriebszeit und aufgrund der mechanische und thermischen, insbesondere auch transienten Beanspruchung der Materialien in diesem Bereich Ermüdungserscheinungen des Materials aufgetreten sind.

Ausgehend von diesem Stand der Technik, ist es die Aufgabe der Erfindung, einen Reaktordruckbehälterdeckel für einen Siedewasserreaktor anzugeben, bei dem die vorgenannten Ermüdungserscheinungen nicht oder zu einem späteren Zeitpunkt als seither eintreten, und bei welchem Reaktordruckbehälterdeckel zudem ein einfacherer Austausch von Deckelsprühköpfen ermöglicht ist.

Diese Aufgabe wird gelöst durch den erfindungsgemäßen Reaktordruckbehälterdeckel für einen Siedewasserreaktor mit den in Anspruch 1 genannten Merkmalen.

Demnach ist der erfindungsgemäße Reaktordruckbehälterdeckel dadurch gekennzeichnet, dass der wenigstens eine Deckelsprühkopf mit dem ihm zugeordneten Stutzen lösbar verbunden ist, das Dichtmittel an der Verbindungsstelle zwischen dem wenigstens einen Deckelsprühkopf und dem diesem zugeordneten Stutzen vorhanden sind, durch welche Dichtmittel ein Kühlwasseraustritt in den Reaktorinnenraum vermieden ist und dass mit zusätzlichen Verdrehsicherungsmitteln die Position des wenigstens einen Deckelsprühkopfs gegen Verdrehen um eine gedachte Längsachse des ihm zugeordneten Stutzens vermieden ist.

Die einzelnen technischen Funktionen einer Verbindung zwischen einem Stutzen und einem Deckelsprühkopf sind durch unterschiedliche technische Bauelemente realisiert, besonders die Abdichtung gegen Kühlwasseraustritt sowie die Verdrehsicherung gegen ein ungewolltes Verdrehen des Deckelsprühkopfes relativ zum Stutzen. Auf diese Weise ist vorteilhafterweise erreicht, dass die separierten Funktionen auch einzeln optimiert werden können. Eine gegenseitige, nachteilige Beeinflussung durch einzelne technische Maßnahmen, die jedoch eine technische Doppelfunktion ausüben, ist dadurch verhindert. Eine vorteilhafte Erhöhung der Lebensdauer dieser Verbindungsstelle hängt also nur noch von der Optimierung der einzelnen, separat zu betrachtenden technischen Anforderungen der Funktionen ab. Auf diese Weise ist der Konstruktion dieser Verbindungsstelle keine prinzipielle Lebensdauerbeschränkung mehr vorgegeben. Zudem können auch ganz gezielt erkannten Schwachstellen z.B. mechanische an der Verbindung zwischen Stutzen und Deckelsprühkopf durch entsprechende Maßnahmen z. B. konstruktive, ohne Wechselwirkung mit anderen Anforderungen auf einfache Weise behoben werden.

Eine vorteilhafte Weiterbildung des erfindungsgemäßen Reaktordruckbehälterdeckels ist dadurch gekennzeichnet, dass die Verbindung zwischen einem Stutzen und dem diesem zugeordneten Deckelsprühkopf eine Flanschanordnung ist. Eine bevorzugte Flanschanordnung besteht in der Regel aus zwei Flanschen. Ein erster Flansch ist dabei mit dem Stutzen verbunden, beispielsweise indem er angeschweißt ist. Diese Schweißverbindung hat alleine die Aufgabe, die mechanischen und thermischen Belastungen an dieser Stelle zu ertragen. Diese Schweißverbindung ist für diesen Zweck somit besonders gut optimierbar.

Ein zweiter Flansch der Flanschanordnung ist entsprechend mit dem Deckelsprühkopf verbunden, beispielsweise ebenfalls angeschweißt. Auch diese Schweißnaht ist besonders einfach optimierbar, entsprechend den thermischen und mechanischen Anforderungen. Ein besonderer Vorteil einer Flanschanordnung ist auch darin zu sehen, dass die beiden Flansche auf einfache Weise gegeneinander abgedichtet werden können, beispielsweise indem eine Dichtung zwischen die sich gegenüberliegenden Stirnseiten der beiden Flansche zwischengefügt wird.

Ein weiterer Vorteil einer solchen Flanschanordnung ist es, dass die Flansche einen größeren maximalen Durchmesser anderen Verbindungsstelle aufweisen, als die beiden Bauelemente, hier der Stutzen sowie der Deckelsprühkopf, in dem Bereich, in dem dieser an den zweiten Flansche angeschlossen ist. Auf diese Weise ist auch erreicht, dass die Verbindungsstelle der Flansche ein mechanisch unkritischer Bereich der Verbindung zwischen Deckelsprühkopf und Stutzen ist.

Mit einer Flanschanordnung kann auch in besonders einfacher Weise eine Verdrehsicherung realisiert werden. Als Verdrehsicherungsmittel kommen beispielsweise Passstifte in den Flanschscheiben der Flanschanordnung in Betracht. Eine vorteilhafte Weiterbildung der Erfindung sieht zudem vor, dass die Befestigungsmittel, also insbesondere die Schrauben zum Verbinden der Flansche, so ausgestaltet sind, dass sie gleichzeitig als Verdrehsicherungsmittel wirken. Das kann in einer vorteilhaften Ausgestaltung wenigstens eine Ausnehmung im ersten Flansch sein, wobei wenigstens eine weitere Ausnehmung, die zudem ein Gewinde aufweist, im zweiten Flansch angeordnet ist. Durch das Eindrehen der Schrauben in den zweiten Flansch wird gleichzeitig ein Verdrehend der beiden Flansche gegeneinander in Umfangsrichtung gesehen, sicher verhindert.

Weitere vorteilhafte Ausgestaltungen des Erfindungsgegenstandes sind den abhängigen Ansprüchen zu entnehmen.

Anhand den in den Zeichnungen angegebenen Ausführungsbeispielen sollen die Erfindung, ihre Vorteile sowie weitere Verbesserungen der Erfindung näher erläutert und beschrieben werden.

Es zeigen:
- Fig. 1: eine 3D-Ansicht auf einen Reaktordruckbehälterdeckelausschnitt mit einem Deckelsprühkopf,
- Fig. 2: einen Querschnitt durch den Ausschnitt gemäß Fig. 1,
- Fig. 3: eine Vergrößerungsansicht des mit "X" gekennzeichneten Bereiches in Fig. 2 sowie
- Fig. 4: eine Schnittdarstellung entlang der Schnittebene B - B, wie in Fig. 2 angegeben.

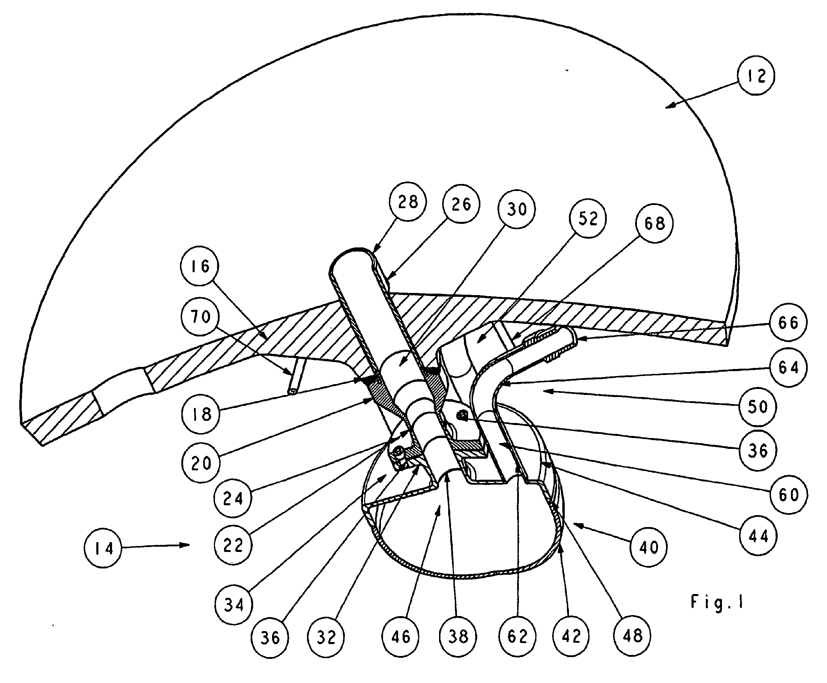

Fig. 1 zeigt in einer dreidimensionalen (3D) Darstellung einen Ausschnitt eines Reaktordruckbehälterdeckels 12 in einem Bereich, an dem ein Deckelsprühkopf 14 angeordnet ist. Der Reaktordruckbehälterdeckel 12 weist an einer Stelle eine Verdickung 16 auf, an der mittels einer ersten Schweißverbindung 18 ein Stutzen 20 angebracht ist. Durch eine zweite Schweißverbindung 22 ist ein erster Flansch 24 mit dem Stutzen verbunden.

Der Reaktordruckbehälterdeckel 12 hat eine erste Ausnehmung 26, durch die eine Kühlwasserleitung 28 durchgreift und bis zum Stutzen 20 geführt ist. Dabei ist ein erstes Ende der Kühlwasserleitung 28, in dieser Figur oben dargestellt, mit dem Deckelkühlsystem verbunden, das die Kühlwasserversorgung des Deckelsprühkopfes 14, sowie der weiteren Deckelsprühköpfe, die in dieser Fig. nicht dargestellt sind, sicherstellt. Das zweite Ende der Kühlmittelleitung 28 ist bis in dem Bereich der Verbindungsstelle zwischen der Verdickung 16 und dem Stutzen 20 geführt, so dass die erste Schweißverbindung 18 auch die Kühlmittelleitung 28 mit dem Stutzen 20 sowie dem Reaktordruckbehälterdeckel 12 verbindet. Der Stutzen 20 weist eine zweite Ausnehmung 30 auf, durch die das Kühlwasser von der Kühlwasserleitung 28 kommend, weiter geleitet wird bis zum ersten Flansch 24.

Der erste Flansch 24 ist mittels Schrauben 36 an einen zweiten Flansch 32 angeschraubt. Dabei bilden der erste Flansch 24 sowie der zweite Flansch 32 eine sogenannte Flanschanordnung 34 oder auch Flanschverbindung genannt. Der zweite Flansch 32 ist an seinem dem Stutzen 20 abgewandten Ende durch eine dritte Schweißverbindung 38 mit einem Sprühkopfbehälter 40 verbunden. Durch den zweiten Flansch 32 gelangt das zufließende Kühlwasser in den durch den Deckelsprühkopfbehälter 40 gebildeten Raum.

Der Deckelsprühkopfbehälter 40 ist zweiteilig aufgebaut, mit einem Unterteil 42, das in etwa topfförmig ist, sowie mit einem Oberteil 44, das in etwa topfdeckelförmig ausgebildet ist und das in etwa zentrisch eine dritte Ausnehmung 46 aufweist. Der zweite Flansch 32 ist nun auf dem Oberteil 44 derart angeordnet, dass das Kühlwasser durch den zweiten Flansch 32 und durch die dritte Ausnehmung 46 in den Sprühkopfbehälter 40 gelangt. Das Unterteil 42 und das Oberteil 44 sind mit einer vierten Schweißnaht 48 verbunden.

Das Oberteil 44 weist auf seiner dem Reaktordruckbehälterdeckel 12 zugewandten Seite eine in etwa plane Stirnfläche auf. Im Abstand von etwa einem Drittel des Radius des Oberteils 44 vom äußeren Rand ausgehend, sind gleichmäßig über den Umfang verteilt fünf Sprühanordnungen angeordnet, von denen in dieser Figur eine erste Sprühanordnung 50 sowie eine zweite Sprühanordnung 52 zu sehen sind.

Die erste Sprühanordnung 50 weist ein Rohrstück 60 auf, das mit einem ersten Ende in der Figur oberhalb einer entsprechenden Ausnehmung im Oberteil 44 angeordnet ist. Ein erstes Teilstück 62 des Rohrstücks 60 ist ein gerades Rohrelement und steht genau senkrecht auf der Oberfläche des Oberteils 44. In einem bestimmten Abstand vom Oberteil 44 schließt sich dem ersten Teilstück 62 ein Bogenstück 64 des Rohrstücks 60 an, das in etwa einen Bogen von 135° beschreibt und radial nach außen im Bezug auf das Oberteil 44 orientiert ist. An einem zweiten Ende des Rohrstücks 60 ist ein Düsenstück 66 angeordnet, das dafür sorgt, dass das durch den Sprühkopfbehälter 40 sowie durch das Rohrstück 60 dem Düsenstück 66 zugeleitete Kühlwasser, auf den Reaktordruckbehälterdeckel 12 gesprüht wird.

Die Zweite 52 der fünf Sprühanordnungen in dieser Figur noch zu sehen, die jedoch im wesentlichen im Bildhintergrund ist, so dass nur ein kleiner Ausschnitt der zweiten Sprühanordnung 52 sichtbar ist. Die erste 50 sowie die zweite Sprühanordnung 52 sind mit einem ersten Verbindungsstab 68 im Bereich des Düsenstücks 66 beziehungsweise in einem entsprechenden Bereich an der zweiten Sprühanordnung 52 miteinander verbunden. Diese Verbindung ist in diesem Beispiel durch eine Schweißverbindung hergestellt. Durch entsprechende weitere Verbindungsstäbe 70 sind auch die weiteren Sprühanordnungen untereinander jeweils die benachbarten, verbunden. Eine derartige Ausgestaltung hat sich als besonders vorteilhaft gegen mögliche Schwingungsanregungen, zum Beispiel aufgrund des durchströmenden Kühlwassers, erwiesen.

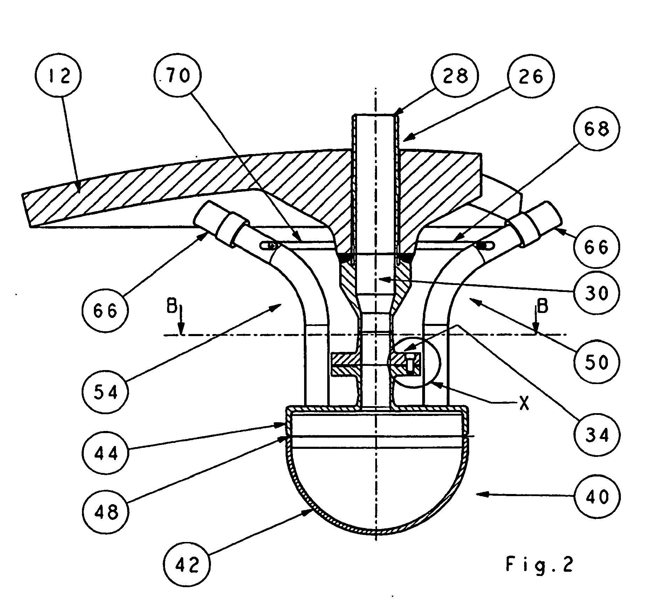

Figur.2 zeigt einen Querschnitt durch den Ausschnitt gemäß Fig.1. Demgemäss wurden die Bezugszeichen, die in der Fig. 1. eingeführt wurden, für die entsprechenden Bauteile verwendet.

In dieser Figur ist neben der ersten Sprühanordnung 50 eine dritte Sprühanordnung 54 gezeigt, während die in der Figur 1 sichtbare zweite Sprühanordnung 52 in dieser Ansicht genau hinter der Anordnung des Reaktordruckbehälterdeckels 12, der Kühlwasserleitung 28, dem Stutzen 20, der Flanschanordnung 34 sowie dem Sprühkopfbehälter 40 verdeckt wird. Zudem ist neben dem ersten Verbindungselement 68 eine der weiteren Verbindungselemente 70 gezeigt, das die nicht sichtbare zweite ren Verbindungselemente 70 gezeigt, das die nicht sichtbare zweite Sprühanordnung 52 mit der dritten Sprühanordnung 54 verbindet.

Zudem ist in Fig. 2 gut erkennbar, dass der Reaktordruckbehälterdeckel 12 insgesamt eine Gestalt zumindest im Bereich um die Verdickung 16 in etwa der Oberfläche eines Kugelausschnitts annimmt.

Außerdem ist in der Fig. 2 erkennbar, dass die Kühlwasserleitung 28 von außerhalb des Reaktordruckbehälters, in dieser Figur oben dargestellt, das Kühlwasser durch die zweite Ausnehmung 30 sowie durch die Flanschanordnung 34 in den Sprühkopfbehälter 40 führt. Die komplette Anordnung des Deckelsprühkopfes 14 ist also im Innenbereich des Reaktordruckbehälters angeordnet. Der weitere Verlauf der Kühlwasserleitung 28 außerhalb des Reaktordruckbehälters ist nicht weiter dargestellt. Das Kühlwassersystem, welches der Kühlwasserleitung 28 das Kühlwasser, insbesondere Deionat zuführt, kann einerseits als separates Kühlwassersystem mit Pumpen, Regel- und Steuereinrichtungen ausgestaltet sein. Es ist aber auch denkbar, dass dieses Kühlwassersystem das Kühlwasser aus dem primären Reaktorkühlsystem abzweigt und lediglich die Regel- und Steueraufgaben bezüglich der Kühlwasserversorgung der Deckelsprühköpfe 14 übernimmt.

Aufgrund der Ausrichtung des Düsenstücks 66 sowie des entsprechenden Düsenstücks an der dritten Düsenanordnung 54 ist gut erkennbar, dass aus den Düsenstücken 66 austretendes Kühlwasser einen durch die Ausrichtung der Düsenstücke 66 vorgegebenen Bereich um die Verdickung 16 am Reaktordruckbehälterdeckel 12, und zwar auf der dem Reaktorinneren zugewandten Seite des Reaktordruckbehälterdeckels 12, besprühen. Durch eine entsprechende Anzahl von Deckelsprühköpfen 14, die in einem vorgegebenen Muster an der Innenseite des Reaktordruckbehälterdeckels 12 verteilt werden, ist eine gleichmäßige Kühlung des Reaktordruckbehälterdeckels 12 gewährleistet. Diese Kühlmaßnahme ist in bestimmten Betriebszuständen des Reaktors sinnvoll, um den Lebenszeitverbrauch des Reaktordruckbehälterdeckels 12, als dickwandigem Bauteil mit transienten Temperaturbelastungen, möglichst gering zu halten. Die Anordnung von Deckelsprühköpfen 14 ist insbesondere für einen Siedewasserreaktor geeignet, da der Bereich des Druckbehälters unterhalb des Druckbehälterdeckels bei diesem Reaktortyp mit Dampf beaufschlagt ist, und nicht wie bei Druckwasserreaktoren üblich mit Kühlwasser, so dass für die vorstehend genannten Betriebszustände eine zusätzliche Kühlmöglichkeit durch aufgesprühtes Kühlwasser vorteilhaft ist.

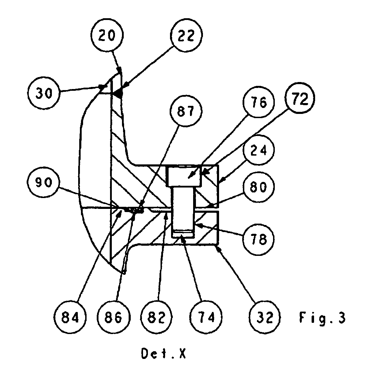

Fig. 3 zeigt eine Vergrößerungsansicht des mit "X" gekennzeichneten Bereiches, wie er in der Fig. 2 dargestellt ist. Wie schon zuvor, werden die Bezugszeichen, die bereits eingeführt sind aus den vorstehenden Figuren übernommen. Dargestellt ist ein vergrößerter Bereich der Flanschverbindung 34 mit dem ersten 24 sowie dem zweiten Flansch 32. Im folgenden sollen bestimmte Details, die in den zuvor genannten Figuren nicht dargestellt werden konnten, näher erläutert werden.

Im ersten Flansch 24 ist eine vierte Ausnehmung 72 angeordnet, die im dargestellten Beispiel als Durchgangsloch ausgestaltet ist, wobei ein erster Bereich, der dem zweiten Flansch 32 abgewandt ist, einen größeren Durchmesser aufweist, als ein zweiter Bereich, so dass eine entsprechend auf die vierte Ausnehmung 72 angepasste Schraube 76 gerade soweit in die vierte Ausnehmung 72 versenkt werden kann, dass einerseits der Schraubenkopf nicht mehr über die entsprechende Stirnseite des ersten Flansches 24 herausragt, andererseits der Schraubenkopfunterseite als Anschlag dient, so dass die in die vierte Ausnehmung 72 eingesetzte Schraube 76 sicher in der vierten Ausnehmung 72 gehalten ist. Der zweite Flansch 32 weist eine fünfte Ausnehmung 74 auf, die als Sackloch ausgestaltet ist. Das Sackloch 74 weist ein Gewinde 78 auf, das in dieser Figur nicht näher dargestellt ist. Dargestellt hingegen ist die Schraube 76, welche in der vierten Ausnehmung 72 positioniert ist, und das Gewinde 78 der fünften Ausnehmung 74 eingeschraubt ist. Mit einer derartigen Anordnung ist ein Verdrehen der Flansche 24, 32 gegeneinander verhindert und in vorteilhafter Weise eine Verdrehsicherung erreicht.

Der erste Flansch 24 weist eine erste Stirnseite 80 auf, die einer zweiten Stirnseite 82 des zweiten Flansches 32 gegenüberliegt. Im gewählten Ausführungsbeispiel ist die erste Stirnseite 80 im wesentlichen Plan ausgeführt, während die zweite Stirnseite 82 im radial gesehen inneren Bereich der Stirnfläche eine Anformung 84 aufweist. Die Anformung selbst ist in dem Bereich, in dem sie den ersten Flansch 24 berührt, plan ausgeführt. Der weitere Bereich der zweiten Stirnfläche 82 ist entsprechend der Dicke der Anformung 84 von der ersten Stirnfläche 80 beabstandet. Im weiteren Bereich ist auch die Schraube 76 angeordnet. Auf diese Weise ist erreicht, dass die Schraube 76 mit einem vorgegebenen Drehmoment eine planbare und sichere Schraubverbindung gewährleisten kann. Zudem weist die Anformung 84 eine sechste Ausnehmung 86 auf, die sich als ringförmige Nut in der Stirnfläche der Anformung 84 darstellt. In diese sechsten Ausnehmung 86 kann ein Dichtmittel eingelegt werden, dass hier als O-Ring 90 dargestellt ist.

Es ist aber auch ohne weiteres denkbar, dass die Funktion der Anformung 84 durch einen metallischen Dichtring, der ebenfalls, zumindest teilweise, in eine entsprechende ringförmige Nut eingelassen sein kann, übernommen wird. Dann kann die Anformung 84 gegebenenfalls sogar entfallen.

Des weiteren ist dieser Fig. gut zu entnehmen, dass durch die erfindungsgemäße konstruktive Maßname ein erster räumlicher Bereich der Verbindung zwischen dem Deckelsprühkopf 14 und dem Stutzen 20 für die Dichtmaßnahme gegen Kühlwasseraustritt vorgesehen und optimierbar ist, während ein anderer räumlicher Bereich an der Flanschverbindung 34 die Verdrehsicherung übernimmt, während die rein mechanische Verbindung des ersten Flansches 24 über die zweite Schweißverbindung 22 hergestellt ist, sowie die Flansche 24, 32 mittels der Schraube 76 untereinander verbunden sind.

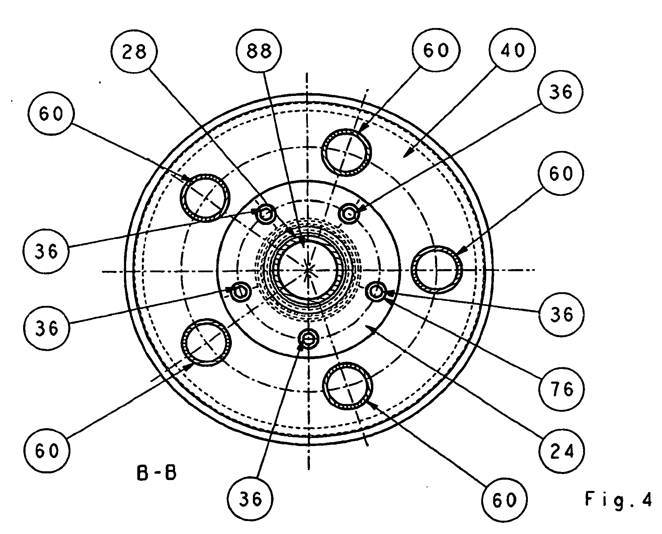

Fig. 4 zeigt eine Schnittdarstellung entlang der Schnittebene B-B, wie sie in der Fig. 2 eingezeichnet ist. Die Bezugszeichen werden wie schon zuvor aus den vorstehenden Figuren übernommen. Dabei ist die ganze Figur symmetrisch um eine gedachte Symmetrie- beziehungsweise Mittellinie 88 des Stutzens 20, die im gewählten Beispiel auch mit der Längsachse der Kühlmittelleitung 28 zusammen fällt, dargestellt. Zudem ist die Darstellung aus einer Ansicht von oben, das heißt aus der Blickrichtung des Reaktordruckbehälterdeckels 12, vorgenommen worden.

In dieser Darstellung sind die Schrauben 36, von denen eine in der Figur 3 als Schraube 76 bezeichnet wurde, beziehungsweise deren Schraubenköpfe von oben sichtbar. Das zeigt, dass im gewählten Beispiel die Schrauben 36 von der Seite des Reaktordruckbehälterdeckels 12 eingeschraubt werden. Das hat den Vorteil, dass der Abstand zwischen dem zweiten Flansch 32 sowie dem Sprühkopfbehälter 40 besonders kurz gewählt werden kann. Auf der anderen Seite, nämlich der Abstand zwischen dem ersten Flansch 24 sowie dem Reaktordruckbehälterdeckel 12, ist vergleichsweise groß, so dass genügend Raum zum Eindrehen der Schrauben ist und gleichzeitig ein durch das Genehmigungsverfahren festgelegtes Konstruktionsmaß, nämlich ein maximaler Abstand zwischen dem Reaktordruckbehälterdeckel 12 und dem Sprühkopfbehälter 40, eingehalten wird.

Zudem ist in dieser Fig. gut zu erkennen, dass die Position der Schrauben 36 sowie die Positionen der Rohrstücke 60 in Umfangsrichtung gesehen gegeneinander versetzt sind. Der Vorteil liegt hierbei in einer besonders einfachen Montage der Schrauben 36, die aufgrund der gewählten Anordnung besonders leicht zugänglich sind.

### Bezugszeichenliste

- 12: Reaktordruckbehälterdeckel
- 14: Deckelsprühkopf
- 16: Verdickung
- 18: erste Schweißverbindung
- 20: Stutzen
- 22: zweite Schweißverbindung
- 24: erster Flansch
- 26: erste Ausnehmung
- 28: Kühlwasserleitung
- 30: zweite Ausnehmung
- 32: zweiter Flansch
- 34: Flanschanordnung
- 36: Schrauben
- 38: Schweißverbindung
- 40: Sprühkopfbehälter
- 42: Unterteil
- 44: Oberteil
- 46: dritte Ausnehmung
- 48: vierte Schweißnaht
- 50: erste Sprühanordnung
- 52: zweite Sprühanordnung
- 54: dritte Sprühanordnung
- 60: Rohrstück
- 62: erstes Teilstück
- 64: Bogenstück
- 66: Düsenstück
- 68: erster Verbindungsstab
- 70: zweiter Verbindungsstab
- 72: vierte Ausnehmung
- 74: fünfte Ausnehmung
- 76: Schraube
- 78: Gewinde
- 80: erste Stirnseite
- 82: zweite Stirnseite
- 84: Anformung
- 86: sechste Ausnehmung
- 88: Mittellinie
- 90: O-Ring

## Patentansprüche

1. Reaktordruckbehälterdeckel (12) für einen Siedewasserreaktor mit einem Deckelkühlsystem, das wenigstens einen auf der dem Reaktorinneren zugewandten Seite angeordneten Deckelsprühkopf (14) aufweist, wobei der wenigstens eine Deckelsprühkopf (14) an einem ihm zugeordneten Stutzen (20) beim Reaktordruckbehälterdeckel (12) befestigt ist, durch welchen Stutzen (20) das Kühlwasser des Deckelkühlsystems dem wenigstens einen Deckelsprühkopf (14) zuführbar ist, **dadurch gekennzeichnet dass** der wenigstens eine Deckelsprühkopf (14) mit dem ihm zugeordneten Stutzen (20) an einer Verbindungsstelle lösbar verbunden ist, dass Dichtmittel an der Verbindungsstelle zwischen dem wenigstens einen Deckelsprühkopf (14) und dem diesem zugeordneten Stutzen (20) vorhanden sind, durch welche Dichtmittel ein Kühlwasseraustritt in den Reaktorinnenraum vermieden ist, und dass mit Verdrehsicherungsmitteln die Position des wenigstens einen Deckelsprühkopfs (14) gegen Verdrehen um eine gedachte Längsachse des ihm zugeordneten Stutzens (20) vermieden ist.

2. Reaktordruckbehälterdeckel (12) nach Anspruch 1, **dadurch gekennzeichnet, dass** das Deckelkühlsystem am primären Kühlwassersystem des Siedewasserreaktors angeschlossen ist.

3. Reaktordruckbehälterdeckel (12) nach Anspruch 1 oder 2, **dadurch gekennzeichnet, dass** an dem einen wenigsten Decklsprühkopf (14) wenigstens eine Sprühdüse (66) angeordnet ist.

4. Reaktordruckbehälterdeckel (12) nach einem der vorgenannten Ansprüche, **dadurch gekennzeichnet, dass** der Stutzen (20) kegelstumpfförmig ist.

5. Reaktordruckbehälterdeckel (12) nach Anspruch 3, **dadurch gekennzeichnet, dass** die wenigstens eine Sprühdüse (66) jeweils an einem ersten Ende eines Rohrstückes (60) angeordnet ist, während vom zweiten Ende des Rohrstücks (60) Kühlwasser des Deckelkühlsystems durch das Rohrstück (60) der wenigstens einen Sprühdüse (66) zuleitbar ist.

6. Reaktordruckbehälterdeckel (12) nach Anspruch 3 oder 4, **dadurch gekennzeichnet, dass** in dem Fall, dass wenigstens zwei Rohrstücke (60) mit Sprühdüsen (66) am Deckelsprühkopf (14) angeordnet sind, die betreffenden Rohrstücke (60) durch Stabilisationselemente (68, 70) mit ihren benachbarten Rohrstücken (60) in Umfangsrichtung des Deckelsprühkopfes (14) gesehen, verbunden sind.

7. Reaktordruckbehälterdeckel (12) nach einem der Ansprüche 3 bis 5, **dadurch gekennzeichnet, dass** die wenigstens eine Sprühdüse (66) auf den Reaktordruckbehälterdeckel (12), insbesondere auf den Nahbereich um den dem betreffenden Deckelsprühkopf (14) der wenigstens einen Sprühdüse (66) zugeordneten Stutzen (20), ausgerichtet ist.

8. Reaktordruckbehälterdeckel (12) nach einem der Ansprüche 3 bis 6, **dadurch gekennzeichnet, dass** zwischen einer Kühlwasserzuführleitung (28) am wenigstens einem Deckelsprühkopf (14) und der wenigstens einen Sprühdüse ein Sprühkopfbehälter zwischengeordnet ist.

9. Reaktordruckbehälterdeckel (12) nach einem der vorgenannten Ansprüche, **dadurch gekennzeichnet, dass** die Verbindung zwischen dem Stutzen (20) und dem diesen zugeordneten Deckelsprühkopf (14) durch eine Flanschanordnung (34) hergestellt ist.

10. Reaktordruckbehälterdeckel (12) nach Anspruch 9, **dadurch gekennzeichnet, dass** ein erster Flansch (24) der Flanschanordnung (34) mit dem Stutzen (20) verbunden, insbesondere angeschweißt, ist.

11. Reaktordruckbehälterdeckel (12) nach Anspruch 9 oder 10, **dadurch gekennzeichnet, dass** ein zweiter Flansch (32) der Flanschanordnung (34) mit dem dem Stutzen (20) zugeordneten Deckelsprühkopf (14) verbunden, insbesondere angeschweißt, ist.

12. Reaktordruckbehälterdeckel (12) nach Anspruch 11, **dadurch gekennzeichnet, dass** als Dichtmittel (90) die sich im eingebauten Zustand gegenüberliegenden Stirnseiten (80, 82) der beiden Flansche (24, 32) der Flanschanordnung (34) abdichtend gegen Kühlwasseraustritt in den Reaktorinnenraum ausgebildet sind.

13. Reaktordruckbehälterdeckel (12) nach Anspruch 11, **dadurch gekennzeichnet, dass** als Dichtmittel (90) eine Dichtung, insbesondere eine metallische, den Flanschen (24, 32) der Flanschanordnung (34) zwischengefügt ist.

14. Reaktordruckbehälterdeckel (12) nach einem der Ansprüche 9 bis 13, **dadurch gekennzeichnet, dass** die Verdrehsicherungsmittel (76) wenigstens ein Befestigungsmittel (36), insbesondere Schrauben (36), der Flanschanordnung (34) sind.

15. Reaktordruckbehälterdeckel (12) nach einem der Ansprüche 10 bis 14, **dadurch gekennzeichnet, dass** Befestigungsmittel (36) und gegebenenfalls die Verdrehsicherungsmittel (76) von der dem betreffenden Stutzen (20) zugewandten Stirnseite des ersten Flansches (24) zuführbar sind.

16. Reaktordruckbehälterdeckel (12) nach einem der Ansprüche 11 bis 15, **dadurch gekennzeichnet, dass** der zweite Flansch (32) Ausnehmungen (74) mit Aufnahmeelementen, insbesondere Gewinden (78), aufweist, welche mit den Befestigungsmitteln (36) oder mit den Verdrehsicherungsmitteln (76) verbindbar sind.

17. Reaktordruckbehälterdeckel (12) nach einem der Ansprüche 9 bis 16, **dadurch gekennzeichnet, dass** Befestigungsmittel (36) und gegebenenfalls die Verdrehsicherungsmittel (76) in Umfangrichtung der Flanschanordnung gesehen versetzt zu der wenigstens einen Sprühanordnung (50, 52, 54), beziehungsweise dem dieser zugeordneten Rohrstück (60), angeordnet sind.

## Claims

1. Reactor pressure vessel cover (12) for a boiling water reactor having a cover cooling system which has at least one cover spray head (14) arranged on the side facing the interior of the reactor, the at least one cover spray head (14) being fixed to a connector (20) assigned to it on the reactor pressure vessel cover (12), through which connector (20) the cooling water of the cover cooling system can be supplied to the at least one cover spray head (14), **characterized in that** the at least one cover spray head (14) is detachably connected at a connecting point to the connector (20) assigned to it, **in that** there are sealing means at the connecting point between the at least one cover spray head (14) and the connector (20) assigned to this, by means of which sealing means the emission of cooling water into the interior of the reactor is avoided, and **in that**, with antirotation means, the position of the at least one cover spray head (14) is prevented from rotating about an imaginary longitudinal axis of the connector (20) assigned to it.

2. Reactor pressure vessel cover (12) according to Claim 1, **characterized in that** the cover cooling system is connected to the primary cooling water system of the boiling water reactor.

3. Reactor pressure vessel cover (12) according to Claim 1 or 2, **characterized in that** at least one spray nozzle (66) is arranged on at least one cover spray head (14).

4. Reactor pressure vessel cover (12) according to one of the preceding claims, **characterized in that** the connector (20) is shaped like a truncated cone.

5. Reactor pressure vessel cover (12) according to Claim 3, **characterized in that** the at least one spray nozzle (66) is in each case arranged at a first end of a tubular piece [60), while cooling water from the cover cooling system can be led to the tubular piece (16) of the at least one spray nozzle (66) from the second end of the tubular piece (60).

6. Reactor pressure vessel cover (12) according to Claim 3 or 4, **characterized in that**, in the case in which at least two tubular pieces (60) with spray nozzles (66) are arranged on the cover spray head (14), the relevant tubular pieces (60) are connected to their adjacent tubular pieces (60), as viewed in the peripheral direction of the cover spray head (14), by stabilization elements (68, 70).

7. Reactor pressure vessel cover (12) according to one of Claims 3 to 5, **characterized in that** the at least one spray nozzle (66) is aimed at the reactor pressure vessel cover (12), in particular at the near region around the connector (20) assigned to the relevant cover spray head (14) of the at least one spray nozzle (66).

8. Reactor pressure vessel cover (12) according to one of Claims 3 to 6, **characterized in that** a spray head container is interposed between a cooling water feed line (28) on the at least one cover spray head (14) and the at least one spray nozzle.

9. Reactor pressure vessel cover (12) according to one of the preceding claims, **characterized in that** the connection between the connector (20) and the cover spray head (14) assigned to the latter is produced by means of a flange arrangement (34).

10. Reactor pressure vessel cover (12) according to Claim 9, **characterized in that** a first flange (24) of the flange arrangement (34) is connected to the connector (20), in particular welded on.

11. Reactor pressure vessel cover (12) according to Claim 9 or 10, **characterized in that** a second flange (32) of the flange arrangement (34) is connected to the cover spray head (14) assigned to the connector (20), in particular welded on.

12. Reactor pressure vessel cover (12) according to Claim 11, **characterized in that** the ends (80, 82) of the two flanges (24, 32) of the flange arrangement (34) that are opposite when installed are constructed as a sealing means (90) to seal against the emergence of cooling water into the interior of the reactor.

13. Reactor pressure vessel cover (12) according to Claim 11, **characterized in that** a seal, in particular a metallic seal, is interposed between the flanges (24, 32) of the flange arrangement (34) as a sealing means (90).

14. Reactor pressure vessel cover (12) according to one of Claims 9 to 13, **characterized in that** the antirotation means (76) are at least one fixing means (36), in particular screws (76), of the flange arrangement (34).

15. Reactor pressure vessel cover (12) according to one of Claims 10 to 14, **characterized in that** fixing means (36) and, if appropriate, the antirotation means (76), can be fed in from the end of the first flange (24) that faces the relevant connector (20).

16. Reactor pressure vessel cover (12) according to one of Claims 11 to 15, **characterized in that** the second flange (32) has cutouts (74) with holding elements, in particular threads (78), which can be connected to the fixing means (36) or to the antirotation means (76).

17. Reactor pressure vessel cover (12) according to one of Claims 9 to 16, **characterized in that** fixing means (36) and, if appropriate, the antirotation means (76), as viewed in the peripheral direction of the flange arrangement, are arranged to be offset in relation to the at least one spray arrangement (50, 52, 54) or the tubular piece (60) assigned to the latter.

## Revendications

1. Couvercle (12) pour cuve sous pression de réacteur à eau bouillante, le couvercle étant doté d'un système de refroidissement de couvercle qui présente au moins une tête (14) de pulvérisation de couvercle disposée sur le côté tourné vers l'intérieur du réacteur, la ou les têtes (14) de pulvérisation de couvercle étant fixées sur une ou plusieurs tubulures (20) qui leur sont associées sur le couvercle (12) de la cuve sous pression du réacteur, l'eau de refroidissement du système de refroidissement de couvercle pouvant être amenée à la ou aux têtes (14) de pulvérisation de couvercle par cette ou ces tubulures (20),
**caractérisé en ce que**
la ou les têtes (14) de pulvérisation de couvercle et les tubulures (20) qui leur sont associées sont reliées de manière libérable en un emplacement de liaison,
**en ce que** des moyens d'étanchéité sont prévus à l'emplacement de liaison entre la ou les têtes (14) de pulvérisation de couvercle et la ou les tubulures (20) qui leur sont associées, ces moyens d'étanchéité permettant d'éviter que de l'eau de refroidissement sorte dans l'espace intérieur du réacteur et
**en ce que** la position de la ou des têtes (14) de pulvérisation de couvercle est empêchée par des moyens de blocage de rotation de tourner autour de l'axe longitudinal imaginaire de la ou des tubulures (20) qui leur sont associées.

2. Couvercle (12) pour cuve sous pression de réacteur à eau bouillante selon la revendication 1, **caractérisé en ce que** le système de refroidissement de couvercle est raccordé au système d'eau de refroidissement primaire du réacteur à eau bouillante.

3. Couvercle (12) pour cuve sous pression de réacteur à eau bouillante selon les revendications 1 ou 2, **caractérisé en ce qu'**une ou plusieurs têtes de pulvérisation (66) sont disposées sur la ou les têtes (14) de pulvérisation de couvercle.

4. Couvercle (12) pour cuve sous pression de réacteur à eau bouillante selon l'une des revendications précédentes, **caractérisé en ce que** la tubulure (20) a la forme d'un tronc de cône.

5. Couvercle (12) pour cuve sous pression de réacteur à eau bouillante selon la revendication 3, **caractérisé en ce que** chacune des tuyères de pulvérisation (66) est disposée sur une première extrémité d'une pièce tubulaire (60), l'eau de refroidissement du système de refroidissement de couvercle pouvant être amenée depuis la deuxième extrémité de la pièce tubulaire (60) à la ou aux tuyères de pulvérisation (66) par l'intermédiaire de la pièce tubulaire (60).

6. Couvercle (12) pour cuve sous pression de réacteur à eau bouillante selon les revendications 3 ou 4, **caractérisé en ce qu'**au cas où au moins deux pièces tubulaires (60) dotées de tuyères de pulvérisation (66) sont prévues sur la tête (14) de pulvérisation de couvercle, les pièces tubulaires (60) concernées sont reliées par des éléments de stabilisation (68, 70) à leur pièce tubulaire (60) voisine, dans la direction périphérique de la tête (14) de pulvérisation de couvercle.

7. Couvercle (12) pour cuve sous pression de réacteur à eau bouillante selon l'une des revendications 3 à 5, **caractérisé en ce que** la ou les tuyères de pulvérisation (66) prévues sur le couvercle (12) de la cuve sous pression du réacteur, sont orientées en particulier sur la partie proche de la tubulure (20) associée à la tête (14) de pulvérisation de couvercle concernée de la ou des tuyères de pulvérisation (66).

8. Couvercle (12) pour cuve sous pression de réacteur à eau bouillante selon l'une des revendications 3 à 6, **caractérisé en ce qu'**un récipient de tête de pulvérisation est intercalé entre un conduit (28) d'amenée d'eau de refroidissement prévu sur une ou plusieurs têtes (14) de pulvérisation de couvercle et la ou les tuyères de pulvérisation.

9. Couvercle (12) pour cuve sous pression de réacteur à eau bouillante selon l'une des revendications précédentes, **caractérisé en ce que** la liaison entre la tubulure (20) et la tête (14) de pulvérisation de couvercle qui lui est associée est réalisée par un ensemble de bride (34).

10. Couvercle (12) pour cuve sous pression de réacteur à eau bouillante selon la revendication 9, **caractérisé en ce qu'**une première bride (24) de l'ensemble de bride (34) est reliée et en particulier soudée à la tubulure (20).

11. Couvercle (12) pour cuve sous pression de réacteur à eau bouillante selon les revendications 9 ou 10, **caractérisé en ce qu'**une deuxième bride (32) de l'ensemble de bride (34) est reliée et en particulier soudée à la tête (14) de pulvérisation de couvercle associée à la tubulure (20).

12. Couvercle (12) pour cuve sous pression de réacteur à eau bouillante selon la revendication 11, **caractérisé en ce que** les côtés frontaux (80, 82), opposés l'un à l'autre à l'état monté, des deux brides (24, 32) de l'ensemble de bride (34) sont configurés comme moyens d'étanchéité (90) qui assurent l'étanchéité vis-à-vis de la sortie d'eau de refroidissement dans l'espace intérieur du réacteur.

13. Couvercle (12) pour cuve sous pression de réacteur à eau bouillante selon la revendication 11, **caractérisé en ce qu'**un joint d'étanchéité et en particulier un joint d'étanchéité métallique est inséré en tant que moyen d'étanchéité (90) entre les brides (24, 32) de l'ensemble de bride (34).

14. Couvercle (12) pour cuve sous pression de réacteur à eau bouillante selon l'une des revendications 9 à 13, **caractérisé en ce que** les moyens (76) de blocage de la rotation sont au moins un moyen de fixation (36), et en particulier une vis (36), de l'ensemble de bride (34).

15. Couvercle (12) pour cuve sous pression de réacteur à eau bouillante selon l'une des revendications 10 à 14, **caractérisé en ce que** des moyens de fixation (36) et éventuellement les moyens de blocage (76) contre la rotation peuvent être amenés par le côté frontal, tourné vers la tubulure (20) concernée, de la première bride (24).

16. Couvercle (12) pour cuve sous pression de réacteur à eau bouillante selon l'une des revendications 11 à 15, **caractérisé en ce que** la deuxième bride (32) présente des découpes (74) dotées d'éléments de reprise, en particulier de filets (78) qui peuvent être reliés aux moyens de fixation (36) ou aux moyens (76) de blocage contre la rotation.

17. Couvercle (12) pour cuve sous pression de réacteur à eau bouillante selon l'une des revendications 9 à 16, **caractérisé en ce que** les moyens de fixation (36) et éventuellement les moyens (76) de blocage contre la rotation sont décalés dans la direction périphérique de l'ensemble de bride par rapport à un ou plusieurs ensembles de pulvérisation (50, 52, 54) ou par rapport aux pièces tubulaires (60) qui leur sont associées.
